(19) Europäisches Patentamt
European Patent Office
Office européen des brevets

(11) **EP 4 170 882 B1**

(12) **EUROPEAN PATENT SPECIFICATION**

(45) Date of publication and mention
of the grant of the patent:
**01.04.2026 Bulletin 2026/14**

(21) Application number: **21864590.1**

(22) Date of filing: **25.08.2021**

(51) International Patent Classification (IPC):
*H02M 3/156* (2006.01)     *H02M 1/32* (2007.01)
*H02M 1/34* (2007.01)     *H02M 1/00* (2006.01)
*B60L 53/20* (2019.01)

(52) Cooperative Patent Classification (CPC):
**H02M 3/156; B60L 53/20; H02M 1/0054;**
**H02M 1/32; H02M 1/346;** B60L 2210/10;
B60L 2210/30; H02J 2207/20; Y02T 10/70;
Y02T 10/7072; Y02T 10/72; Y02T 10/92;
Y02T 90/14

(86) International application number:
**PCT/KR2021/011403**

(87) International publication number:
**WO 2022/050630 (10.03.2022 Gazette 2022/10)**

(54) **PROTECTION CIRCUIT, DC-DC CONVERTER, BATTERY CHARGER AND ELECTRIC VEHICLE**

SCHUTZSCHALTUNG, GLEICHSPANNUNGSWANDLER, BATTERIELADEGERÄT UND ELEKTROFAHRZEUG

CIRCUIT DE PROTECTION, CONVERTISSEUR CC-CC, CHARGEUR DE BATTERIE ET VÉHICULE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2020 KR 20200111845**

(43) Date of publication of application:
**26.04.2023 Bulletin 2023/17**

(73) Proprietor: **LG Energy Solution, Ltd.**
**Seoul 07335 (KR)**

(72) Inventor: **HAM, Seok-Hyeong**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
WO-A1-2020/035969     CN-A- 109 742 944
JP-A- 2002 231 482     JP-A- 2007 082 332
JP-A- 2007 082 332     JP-A- 2013 135 570
KR-A- 20100 078 281     US-A1- 2003 001 516
US-A1- 2018 123 480

**Description**

TECHNICAL FIELD

The present disclosure relates to technology for protecting a direct current (DC)-DC converter from switching loss.

The present application claims priority to Korean Patent Application No. 10-2020-0111845 filed on September 2, 2020 in the Republic of Korea.

BACKGROUND ART

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that can be recharged repeatedly.

Currently, commercially available batteries include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages that recharging can be done whenever it is convenient, the self-discharge rate is very low and the energy density is high.

An electric vehicle includes a battery and a battery charger. The battery charger generates the charge power for the battery using the input power from an external power source when connected to the external power source through a charging cable. In general, the battery charger includes a direct current (DC)-DC converter to generate the output voltage that is lower than the input voltage.

To keep up with the recent trend toward lightweight electric vehicles, there is a growing demand for lighter and smaller DC-DC converters. To reduce the weight and size of the DC-DC converter, it is necessary to increase the switching frequency of a switching signal rather than reducing the size of each physical device included in the DC-DC converter.

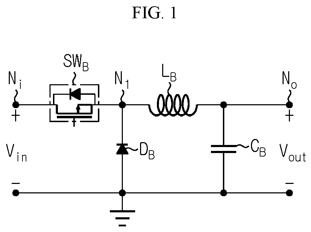

FIG. 1 is a schematic diagram of a common DC-DC stepdown converter. Referring to FIG. 1, the DC-DC converter includes a buck switch $SW_B$ connected between a voltage input terminal $N_i$ and a first node $N_1$; a buck inductor $L_B$ connected between the first node $N_1$ and a voltage output terminal $N_o$; a buck capacitor $C_B$ connected between the voltage output terminal $N_o$ and the ground; and a buck diode $D_B$ connected between the first node $N_1$ and the ground. When the buck switch $SW_B$ is switched from an ON state to an OFF state, the buck diode $D_B$ is turned on, and voltage which is, in substance, equal to 0V, is supplied between the first node $N_1$ and the ground. On the contrary, when the buck switch $SW_B$ is switched from the OFF state to the ON state, the buck diode $D_B$ is turned off, and voltage which is, in substance, equal to the input voltage $V_{in}$ is supplied between the first node $N_i$ and the ground. As a result, each time the buck switch $SW_B$ is switched between the ON state and the OFF state, voltage stress which is, in substance, equal to the input voltage $V_{in}$, occurs across the buck switch $SW_B$.

However, since the switching loss of the DC-DC converter is proportional to the voltage stress, when the switching frequency increases, the power efficiency of the DC-DC converter reduces, and the DC-DC converter is overheated.

WO 2020/035969 A1 relates to a reactor-attached connection switching circuit capable of selecting a series connection or a parallel connection of two batteries that further has a step-up mode, a step-down mode, and a transient mode.

US 2003/001516 A1 relates to a buck converter.

JP 2007 082332 A relates to a DC-DC converter.

DISCLOSURE

Technical Problem

The present disclosure is designed to solve the above-described problem, and therefore the present disclosure is directed to providing a protection circuit for protecting a direct current (DC)-DC converter from switching loss, a battery charger comprising the protection circuit and an electric vehicle comprising the battery charger.

These and other objects and advantages of the present disclosure may be understood by the following description and will be apparent from the embodiments of the present disclosure. In addition, it will be readily understood that the objects and advantages of the present disclosure may be realized by the means set forth in the appended claims and a combination thereof.

Technical Solution

In view of the above, a protection circuit for a DC-DC converter is provided as defined by claim 1. A protection circuit according to an aspect of the present disclosure is provided for a direct current (DC)-DC converter. The DC-DC converter includes a buck switch connected between a voltage input terminal and a first node, the buck switch being controlled by a switching cycle and a duty cycle of a switching signal; a buck inductor connected between the first node and a voltage output terminal; a buck diode connected between a second node and a ground; and a buck capacitor connected between the voltage output terminal and the ground. The protection circuit is connected to the first node, the second node and the ground. When the buck switch is switched between an On state and an OFF state according to the switching signal, the protection circuit is configured to supply a protection voltage between the first node and the ground so that voltage stress of the buck switch is smaller than an input voltage supplied between the voltage input terminal and the ground.

The protection circuit includes a first protection capacitor connected between the first node and the second node; a second protection capacitor connected between a third node and the ground; a protection inductor connected between the second node and the third node; and a protection diode connected between the first node and the third node.

The protection diode is kept in the OFF state in a first period of time during which the buck switch is in the ON state. The protection diode is kept in the ON state in a second period of time during which the buck switch is in the OFF state.

The protection voltage may be equal to a voltage of a series circuit of the first protection capacitor and the buck diode.

A voltage of a series circuit of the first protection capacitor, the protection inductor and the second protection capacitor may be equal to a sum of a voltage of the buck inductor and an output voltage in a first period of time during which the buck switch is in the ON state. The output voltage is a voltage between the voltage output terminal and the ground.

A voltage of the first protection capacitor may be equal to a voltage of a series circuit of the protection inductor and the protection diode in the second period of time during which the buck switch is in the OFF state.

A voltage of the second protection capacitor may be equal to a voltage of a series circuit of the protection inductor and the buck diode in the second period of time during which the buck switch is in the OFF state.

A DC-DC converter according to another aspect of the present disclosure includes the protection circuit.

A battery charger according to still another aspect of the present disclosure includes the DC-DC converter.

An electric vehicle according to yet another aspect of the present disclosure includes the battery charger and a battery connected between the voltage output terminal and the ground.

## Advantageous Effects

According to at least one of the embodiments of the present disclosure, it is possible to reduce the switching loss of the buck switch included in the direct current (DC)-DC converter without using an additional switch requiring on-off control.

Additionally, as the switching frequency increases in response to the decreasing switching loss of the buck switch, it is possible to achieve the lightweight and compact design of the DC-DC converter.

The effects of the present disclosure are not limited to the effects mentioned above, and these and other effects will be clearly understood by those skilled in the art from the appended claims.

## DESCRIPTION OF DRAWINGS

The accompanying drawings illustrate a preferred embodiment of the present disclosure, and together with the detailed description of the present disclosure described below, serve to provide a further understanding of the technical aspects of the present disclosure, and thus the present disclosure should not be construed as being limited to the drawings.

FIG. 1 is a schematic diagram of a common direct current (DC)-DC stepdown converter.
FIG. 2 is an exemplary diagram showing a configuration of an electric vehicle of the present disclosure.
FIG. 3 is an exemplary diagram showing a configuration of a battery charger according to the present disclosure.
FIG. 4 is an exemplary diagram showing a configuration of a DC-DC converter of FIG. 3.
FIG. 5 is a schematic diagram showing a current waveform of each device and a voltage waveform of a buck switch over a single switching cycle during the operation of the DC-DC converter of FIG. 4 in a steady state.

## BEST MODE

Hereinafter, the preferred embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and illustrations shown in the drawings are just a most preferred embodiment of the present disclosure, but not intended to fully describe the technical aspects of the present disclosure, so it should be understood that a variety of other equivalents and modifications could have been made thereto at the time that the application was filed.

The terms including the ordinal number such as "first", "second" and the like, are used to distinguish one element from another among various elements, but not intended to limit the elements by the terms.

Unless the context clearly indicates otherwise, it will be understood that the term "comprises" when used in this specification, specifies the presence of stated elements, but does not preclude the presence or addition of one or more other elements. Additionally, the term "control unit" refers to a processing unit of at least one function or operation, and this may be implemented by hardware and software either alone or in combination.

In addition, throughout the specification, it will be further understood that when an element is referred to as being "connected to" another element, it can be directly connected to the other element or intervening elements may be present.

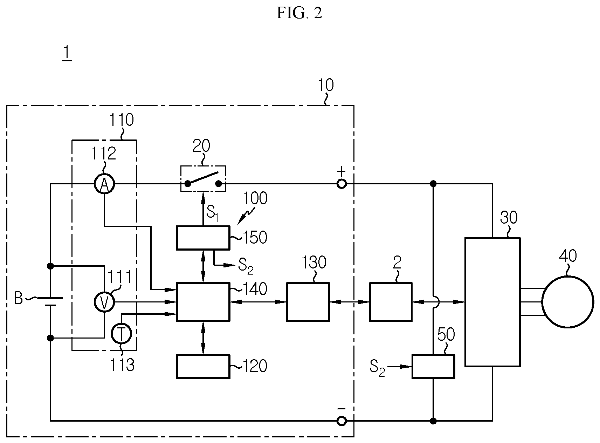

FIG. 2 is an exemplary diagram showing a configuration of an electric vehicle of the present disclosure.

Referring to FIG. 2, the electric vehicle 1 includes a battery pack 10, an inverter 30, an electric motor 40 and a battery charger 50.

The battery pack 10 includes a battery B, a relay 20 and a battery management system 100.

The battery B includes at least one battery cell. Each battery cell is not limited to a particular type, and may include any battery cell that can be repeatedly recharged such as, for example, a lithium ion cell. The battery B may be coupled to the inverter 30 through a pair of power terminals provided in the battery pack 10.

The relay 20 is connected in series to the battery B. The relay 20 is installed on a current path for the charge/discharge of the battery B. The on-off control of the relay 20 is performed in response to a control signal from the battery management system 100. The relay 20 may be a mechanical relay that is turned on/off by the electromagnetic force of a coil or a semiconductor switch such as a Metal Oxide Semiconductor Field Effect transistor (MOSFET).

The inverter 30 is provided to convert the DC power from the battery B to alternating current (AC) power in response to a command from the battery management system 100. The electric motor 40 may be, for example, a 3-phase AC motor. The electric motor 40 works using the AC power from the inverter 30.

The battery management system 100 is provided to perform the general control related to the charge/discharge of the battery B.

The battery management system 100 includes a sensing unit 110, a memory unit 120 and a control unit 140. The battery management system 100 may further include at least one of an interface unit 130 or a switch driver 150.

The sensing unit 110 includes a voltage sensor 111 and a current sensor 112. The sensing unit 110 may further include a temperature sensor 113.

The voltage sensor 111 is connected in parallel to the battery B, and is configured to detect a battery voltage across the battery B and generate a voltage signal indicating the detected battery voltage. The current sensor 112 is connected in series to the battery B through the current path. The current sensor 112 is configured to detect a battery current flowing through the battery B and generate a current signal indicating the detected battery current. The temperature sensor 113 is configured to detect a temperature of the battery B and generate a temperature signal indicating the detected temperature.

The memory unit 120 may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory unit 120 may store data and programs required for the computation operation by the control unit 140. The memory unit 120 may store data indicating the result of the computation operation by the control unit 140.

The interface unit 130 may include a communication circuit configured to support wired or wireless communication between the control unit 140 and a high-level controller 2 (for example, an Electronic Control Unit (ECU)). The wired communication may be, for example, controller area network (CAN) communication, and the wireless communication may be, for example, Zigbee or Bluetooth communication. The communication protocol is not limited to a particular type, and may include any communication protocol that supports the wired/wireless communication between the control unit 140 and the high-level controller 2. The interface unit 130 may include an output device (for example, a display, a speaker) to provide information received from the control unit 140 and/or the high-level controller 2 in a recognizable format. The high-level controller 2 may control the inverter 30 based on battery information (for example, voltage, current, temperature, SOC) collected through the communication with the battery management system 100.

The control unit 140 may be operably coupled to the high-level controller 2, the relay 20, the sensing unit 110, the memory unit 120, the interface unit 130 and/or the switch driver 150. The control unit 140 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, or electrical units for performing the other functions.

The switch driver 150 is configured to output a switching signal $S_1$ to the relay 20 in response to a command from the control unit 140. The switch driver 150 is configured to output a switching signal $S_2$ to the battery charger 50 in response to the command from the control unit 140.

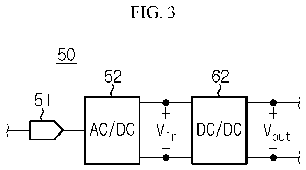

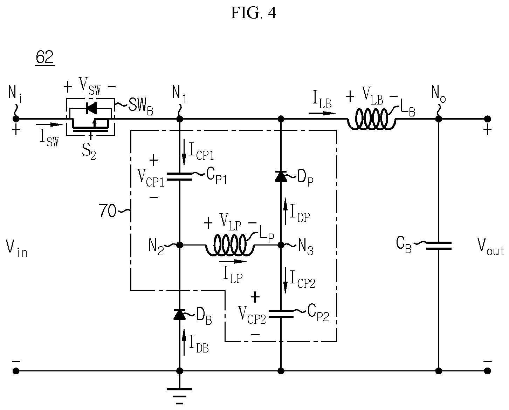

FIG. 3 is an exemplary diagram showing the configuration of the battery charger according to the present disclosure, and FIG. 4 is an exemplary diagram showing the configuration of the DC-DC converter of FIG. 3.

Referring to FIGS. 3 and 4, the battery charger 50 is provided to be connectable to two terminals of the battery B. The battery charger 50 includes the DC-DC converter 62. The battery charger 50 may further include a charger plug 51 and an AC-DC converter 52.

The AC-DC converter 52 is configured to convert the AC power from an AC charging state (not shown) connected to the charger plug 51 to DC power having a predetermined voltage level.

The DC-DC converter 62 is configured to generate the charge power for the battery B using the DC power from the AC-DC converter 52 or a DC charging station (not shown).

The DC-DC converter 62 is a buck converter which steps down the input voltage $V_{in}$ to generate the output voltage $V_{out}$ lower than the input voltage $V_{in}$. The DC-DC converter 62 includes a voltage input terminal $N_i$, a voltage output terminal $N_o$, a buck switch $SW_B$, a buck inductor $L_B$, a buck capacitor $C_B$, a buck diode $D_B$ and a protection circuit 70. The protection circuit 70 may be referred to as a 'passive snubber'.

The input voltage $V_{in}$ from the AC-DC converter 52 or the DC charging station may be supplied between the voltage input terminal $N_i$ and the ground. The battery B may be connected between the voltage output terminal $N_o$ and the ground.

The buck switch $SW_B$ is connected between the voltage input terminal $N_i$ and the first node $N_1$. The on-off control of the buck switch $SW_B$ is performed in response to the switching signal $S_2$ from the switch driver 150. The buck switch $SW_B$ may be a well-known switching device, for example, MOSFET. When the switching cycle and the duty cycle of the switching signal $S_2$ are $T_S$ and D, respectively, the buck switch $SW_B$ is kept in the ON state for a first period of time of Ts×D, and is kept in the OFF state for a second period of time of Ts×(1-D). The sum of the first period of time and the second period of time is equal to the switching cycle $T_S$.

The buck inductor $L_B$ is connected between the first node $N_1$ and the voltage output terminal $N_o$. The buck inductor $L_B$ is charged by the input current from the first node $N_1$ for the first period of time. The energy charged in the buck inductor $L_B$ for the first period of time is supplied to the voltage output terminal $N_o$ for the second period of time. The equilibrium between the energy charged in the buck inductor $L_B$ for the first period of time and the energy discharged from the buck inductor $L_B$ for the second period of time may be referred to 'steady state' of the DC-DC converter 62.

The buck capacitor $C_B$ is connected between the voltage output terminal $N_o$ and the ground. The buck capacitor $C_B$ is provided to suppress the ripple of the output voltage $V_{out}$ supplied between the voltage output terminal $N_o$ and the ground.

The buck diode $D_B$ is connected between a second node $N_2$ and the ground. Specifically, the anode and the cathode of the buck diode $D_B$ are connected to the ground and the second node $N_2$, respectively. For the first period of time during which the buck switch $SW_B$ is in the ON state, the potential of the second node $N_2$ is higher than the ground potential, and the buck diode $D_B$ gets into the OFF state. For the second period of time during which the buck switch $SW_B$ is in the OFF state, the potential of the second node $N_2$ is lower than the ground potential, and the buck diode $D_B$ gets into the OFF state. While the buck diode $D_B$ is in the ON state, the electric current from the ground to the second node $N_2$ flows through the buck diode $D_B$.

The protection circuit 70 is connected to the first node $N_1$, the second node $N_2$ and the ground. The protection circuit 70 is configured to supply a protection voltage between the first node $N_1$ and the ground when the buck switch $SW_B$ is switched from any one of the ON state and the OFF state to the other by the switching signal $S_2$. Since the voltage stress of the buck switch $SW_B$ is a voltage difference between the voltage input terminal $N_i$ and the first node $N_1$, the voltage stress of the buck switch $SW_B$ is reduced below the input voltage $V_{in}$ supplied between the voltage input terminal $N_i$ and the ground by the protection voltage.

The protection circuit 70 includes a first protection capacitor $C_{P1}$, a second protection capacitor $C_{P2}$, a protection inductor $L_P$ and a protection diode $D_P$.

In FIG. 4, $I_{SW}$ denotes the electric current flowing through the buck switch $SW_B$, $I_{LB}$ denotes the electric current flowing through the buck inductor $L_B$, $I_{LP}$ denotes the electric current flowing through the protection inductor $L_P$, $I_{CP1}$ denotes the electric current flowing through the first protection capacitor $C_{P1}$, $I_{CP2}$ denotes the electric current flowing through the second protection capacitor $C_{P2}$, $I_{DB}$ denotes the electric current flowing through the buck diode $D_B$, $I_{DP}$ denotes the electric current flowing through the protection diode $D_P$, and $V_{SW}$ denotes the voltage stress of the buck switch $SW_B$.

The first protection capacitor $C_{P1}$ is connected between the first node $N_1$ and the second node $N_2$.

The second protection capacitor $C_{P2}$ is connected between a third node $N_3$ and the ground.

The first protection capacitor $C_{P1}$ and the second protection capacitor $C_{P2}$ reduce the magnitude of the voltage stress $SW_B$ of the buck switch $SW_B$ by supplying the protection voltage between the first node $N_1$ and the ground when the buck switch $SW_B$ is switched between the ON state and the OFF state.

The protection inductor $L_P$ is connected between the second node $N_2$ and the third node $N_3$. The protection inductor $L_P$ is provided to suppress a sharp change in the electric current $I_{CP1}$ of the first protection capacitor $C_{P1}$ and the electric current $I_{CP2}$ of the second protection capacitor $C_{P2}$ during the charge and discharge of the first protection capacitor $C_{P1}$ and the second protection capacitor $C_{P2}$.

The protection diode $D_P$ is connected between the first node $N_1$ and the third node $N_3$. Specifically, the anode and the cathode of the protection diode $D_P$ are connected to the third node $N_3$ and the first node $N_1$, respectively. When the potential of the first node $N_1$ is lower than the potential of the third node $N_3$, the protection diode $D_P$ gets into the ON state. While the protection diode $D_P$ is in the ON state, the electric current $I_{DP}$ from the third node $N_3$ to the first node $N_1$ flows through the protection diode $D_P$. When the potential of the first node

$N_1$ is higher than the potential of the third node $N_3$, the protection diode $D_P$ gets into the OFF state. While the protection diode $D_P$ is in the OFF state, the flow of the electric current between the first node $N_1$ and the third node $N_3$ is interrupted.

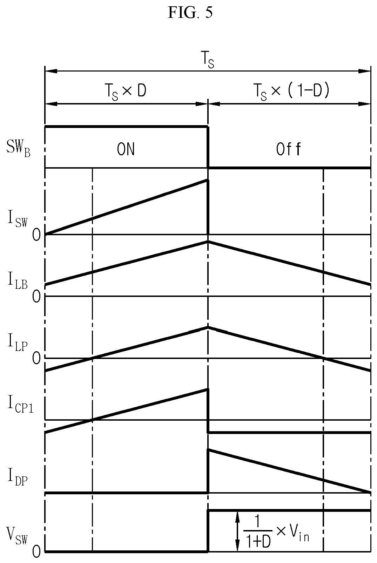

FIG. 5 is a schematic diagram showing a current waveform of each device and a voltage waveform of the buck switch over a single switching cycle during the operation of the DC-DC converter 62 of FIG. 4 in a steady state.

Referring to FIG. 5, a single switch cycle may be divided into four continuous operation modes according to the state of the buck switch $SW_B$ and the direction of the electric current of the protection inductor $L_P$. In the first to fourth operation modes, the electric current $I_{CP1}$ is equal to the electric current $I_{CP2}$, and the electric current $I_{DP}$ is equal to the electric current $I_{DB}$, and thus the waveform of the electric current $I_{CP2}$ and the waveform of the electric current $I_{DB}$ are omitted from FIG. 5.

The first operation mode is an operation mode from the time at which the buck switch $SW_B$ is switched from the OFF state to the ON state to the time at which the electric current $I_{LP}$ reaches 0 A from a negative value. The electric current $I_{LP}$ having the negative value in the first operation mode represents that the first protection capacitor $C_{P1}$) and the second protection capacitor $C_{P2}$ are discharged in the first operation mode.

The second operation mode is an operation mode in which the electric current $I_{LP}$ gradually rises from 0A while the buck switch $SW_B$ is kept in the ON state. The electric current $I_{LP}$ having a positive value that is larger than 0 A in the second operation mode represents that the first protection capacitor $C_{P1}$ and the second protection capacitor $C_{P2}$ are charged in the second operation mode.

In the first operation mode and the second operation mode, the buck diode $D_B$ and the protection diode $D_P$ are in the OFF state. Accordingly, a voltage of a series circuit of the first protection capacitor $C_{P1}$, the protection inductor $L_P$ and the second protection capacitor $C_{P2}$ is equal to the input voltage $V_{in}$.

The third operation mode is an operation mode from the time at which the buck switch $SW_B$ is switched from the ON state to the OFF state to the time at which the electric current $I_{LP}$ reaches 0 A from a positive value.

The fourth operation mode is an operation mode in which the electric current $I_{LP}$ gradually reduces from 0A while the buck switch $SW_B$ is kept in the OFF state.

In the third operation mode and the fourth operation mode, the buck diode $D_B$ and the protection diode $D_P$ are in the ON state, and thus a series circuit of the first protection capacitor $C_{P1}$ and the buck diode $D_B$ supplies the protection voltage that is larger than 0V between the first node $N_1$ and the ground. That is, the protection voltage may be equal to a voltage across the series circuit of the first protection capacitor $C_{P1}$ and the buck diode $D_B$.

When the buck switch $SW_B$ is in the ON state, the voltage of the first node $N_1$ is equal to the input voltage $V_{in}$, and the voltage $V_{LB}$ of the buck inductor $L_B$ is equal to a voltage difference between the input voltage $V_{in}$ and the output voltage $V_{out}$. Accordingly, in the first operation mode and the second operation mode, a relationship of the following Equations 1 and 2 is satisfied.

<Equation 1>

$$V_{LP} = V_{in} - V_{CP1} - V_{CP2} = V_{in} - 2V_{CP1}$$

<Equation 2>

$$V_{LB} = V_{in} - V_{out}$$

When the buck switch $SW_B$ is in the OFF state, the buck diode $D_B$ and the protection diode $D_P$ are in the ON state, and thus equalization may be implemented by the parallel connection of the first protection capacitor $C_{P1}$, the protection inductor $L_P$ and the second protection capacitor $C_{P2}$ between the first node $N_1$ and the ground. Accordingly, when it is assumed that forward voltage drop of each of the buck diode $D_B$ and the protection diode $D_P$ is 0 V, in the third operation mode and the fourth operation mode, a relationship of the following Equations 3 and 4 is satisfied.

<Equation 3>

$$V_{LP} = - V_{CP1} = - V_{CP2}$$

<Equation 4>

$$V_{LB} = V_{CP1} - V_{out} = V_{CP2} - V_{out} = - V_{LP} - V_{out}$$

During the operation of the DC-DC converter 62 in a steady state, an average voltage of each of the buck inductor $L_B$) and the protection inductor $L_P$ over a single switching cycle is 0 V according to the voltage-volt-second balance rule. Accordingly, the following Equation 5 is derived from Equations 1 and 3, and the following Equation 6 is derived from Equations 2 and 4.

<Equation 5>

$$(V_{in} - 2V_{CP1}) \times D - V_{CP1} \times (1 - D) = 0 \ [V]$$

<Equation 6>

$$(V_{in} - V_{out}) \times D + (V_{CP1} - V_{out}) \times (1-D) = 0 \ [V]$$

When Equation 5 is rewritten with respect to

$V_{CP1}$, the following Equation 5-1 is given.

<Equation 5-1>

$$V_{CP1} = \frac{D}{1+D} \times V_{in}$$

When Equation 6 is rewritten with respect to $V_{out}$ using Equation 5-1, the following Equation 6-1 is given.

<Equation 6-1>

$$V_{out} = \frac{2D}{1+D} \times V_{in} = G_V \times V_{in}$$

In Equation 6-1, $G_V$ is a voltage gain of the DC-DC converter 62.

Additionally, the voltage stress when the buck switch $SW_B$ is switched from the ON state to the OFF state is shown in the following Equation 7.

<Equation 7>

$$V_{SW} = V_{in} - V_{CP1} = \frac{1}{1+D} \times V_{in}$$

The duty cycle D is between 0~1. Accordingly, the voltage stress $V_{SW}$ of the DC-DC converter 62 reduces by 1/(1+D) of the input voltage $V_{in}$ by the protection circuit 70. That is, in the conventional DC-DC converter shown in FIG. 1, voltage stress having the same magnitude as the input voltage $V_{in}$ is supplied to the buck switch $SW_B$ irrespective of the duty cycle D, while in the DC-DC converter 62 according to the present disclosure, the voltage stress $V_{SW}$ that is smaller than the input voltage $V_{in}$ is supplied to the buck switch $SW_B$. Additionally, the DC-DC converter 62 according to the present disclosure reduces in voltage stress $V_{SW}$ of the buck switch $SW_B$ with the increasing duty cycle D. The control unit 140 may increase the duty cycle D by a predetermined ratio at a preset time interval using the DC-DC converter 62 during the charge of the battery B.

Further variations and modifications are possible within the scope of the appended claims.

**Claims**

1. A protection circuit (70) for a direct current (DC)-DC converter (62) of an electric vehicle (1), which comprises a control unit (140) configured to control a buck switch ($SW_B$) of the DC-DC converter (62) by a switching signal ($S_2$) having a switching cycle and a duty cycle for generating an output voltage (Vout) at a voltage output terminal ($N_O$) of the DC-DC converter (62);

   wherein the protection circuit (70) includes: a first protection capacitor ($C_{P1}$), wherein a second end of the first protection capacitor ($C_{P1}$) is connected to a second node ($N_2$) and a first end of the first protection capacitor ($C_{P1}$) is configured to be connected to a first node ($N_1$) between the buck switch ($SW_B$) and a buck inductor ($L_B$) of the DC-DC converter (62); a second protection capacitor ($C_{P2}$), wherein a first end of the second protection capacitor ($C_{P2}$) is connected to a third node ($N_3$) and a second end of the second protection capacitor ($C_{P2}$) is configured to be connected to a ground and an anode of a buck diode ($D_B$) of the DC-DC converter (62); a protection inductor ($L_P$) directly connected between the second node (N2) and the third node (N3) in order to allow positive and negative values for an electric current ($I_{LP}$) through the protection inductor ($L_P$); and a protection diode ($D_P$), wherein an anode of the protection diode ($D_P$) is connected to the third node ($N_3$) and a cathode of the protection diode ($D_P$) is configured to be connected to the first node ($N_1$); wherein the protection inductor ($L_P$) is connected to the second protection capacitor ($C_{P2}$) through the third node ($N_3$) and is further configured to be connected to a cathode of the buck diode ($D_B$) through the second node ($N_2$); and

   wherein, when the buck switch ($SW_B$) is switched between an On state and an OFF state according to the switching signal ($S_2$), the protection circuit is configured to supply a protection voltage between the first node ($N_1$) and the ground, so that voltage stress ($V_{sw}$) of the buck switch ($SW_B$) is smaller than an input voltage ($V_{in}$) supplied between a voltage input terminal ($N_i$) and the ground of the DC-DC converter (62).

2. A DC-DC converter (62) comprising the protection circuit according to claim 1, wherein the control unit (140) is configured to control the buck switch ($SW_B$) into the ON state during a first period of time (Ts×D), such that the protection diode ($D_P$) is kept in the OFF state, and wherein the control unit (140) is configured to control the buck switch ($SW_B$) into the OFF state during a second period of time (Ts×(1-D)), such that the protection diode ($D_P$) is kept in the ON state.

3. The DC-DC converter (62) according to claim 2, wherein the protection voltage is equal to a voltage of a series circuit of the first protection capacitor and the buck diode ($D_B$).

4. The DC-DC converter (62) according to claim 2, wherein a voltage of a series circuit of the first protection capacitor ($C_{P1}$), the protection inductor ($L_P$) and the second protection capacitor ($C_{P2}$) is equal to a sum of a voltage of the buck inductor and an output voltage in a first period of time during which the buck switch is in the ON state, and
the output voltage is a voltage between the voltage output terminal and the ground.

5. The DC-DC converter (62) according to claim 2, wherein a voltage of the first protection capacitor ($C_{P1}$) is equal to a voltage of a series circuit of the protection inductor ($L_P$) and the protection diode ($D_P$) in the second period of time during which the buck switch ($SW_B$) is in the OFF state.

6. The DC-DC converter (62) according to claim 2, wherein a voltage of the second protection capacitor ($C_{P1}$) is equal to a voltage of a series circuit of the protection inductor ($L_P$) and the buck diode ($D_B$) in the second period of time during which the buck switch is in the OFF state.

7. The DC-DC converter (62) according to claim 2, wherein the first protection capacitor ($C_{P1}$) and the second protection capacitor ($C_{P2}$) are configured to be discharged in a first operation mode of the first period, and the first protection capacitor ($C_{P1}$) and the second protection capacitor ($C_{P2}$) are configured to be charged in a second operation mode of the first period,

> wherein the first operation mode is an operation mode from the time at which the buck switch ($SW_B$) is switched by the control unit (140) from the OFF state to the ON state to the time at which the electric current ($I_{LP}$) reaches 0 A from a negative value,
> wherein the second operation mode is an operation mode in which the electric current ($I_{LP}$) gradually rises from 0A while the buck switch ($SW_B$) is kept by the control unit (140) in the ON state

8. The DC-DC converter (62) according to claim 2, wherein in a third operation mode of the second period, the electric current from the second node ($N_2$) to the third node ($N_3$) flows through the protection inductor ($L_P$), and in a fourth operation mode of the second period, the electric current from the third node ($N_3$) to the second node ($N_2$) flows through the protection inductor ($L_P$),

> wherein the third operation mode is an operation mode from the time at which the buck switch ($SW_B$) is switched by the control unit (140) from the ON state to the OFF state to the time at which the electric current ($I_{LP}$) reaches 0 A from a positive value,
wherein the fourth operation mode is an operation mode in which the electric current ($I_{LP}$) gradually reduces from 0A while the buck switch ($SW_B$) is kept by the control unit (140) in the OFF state.

9. The DC-DC converter (62) according to any one of claims 2 to 8, wherein the DC-DC converter (62) is configured as a buck converter comprising a buck capacitor ($C_B$), which is connected between the voltage output terminal ($N_O$) and the ground, for suppressing a ripple of the output voltage ($V_{out}$).

10. A battery charger (50) comprising the direct current (DC)-DC converter according to claim 9.

11. An electric vehicle comprising the battery charger (50) according to claim 10.

**Patentansprüche**

1. Schutzschaltung (70) für einen Gleichstrom (DC)-DC-Gleichspannungswandler (62) eines Elektrofahrzeugs (1), die eine Steuereinheit (140) umfasst, die dazu ausgebildet ist, einen Buck-Schalter ($SW_B$) des Gleichspannungswandlers (62) durch ein einen Schaltzyklus und ein Tastverhältnis aufweisendes Schaltsignal ($S_2$) zum Erzeugen einer Ausgangsspannung (Vout) an einer Spannungsausgangsklemme ($N_o$) des Gleichspannungswandlers (62) zu steuern;

> wobei die Schutzschaltung (70) einschließt: einen ersten Schutzkondensator ($C_{P1}$), wobei ein zweites Ende des ersten Schutzkondensators ($C_{P1}$) an einen zweiten Knoten ($N_2$) geschaltet ist und ein erstes Ende des ersten Schutzkondensators ($C_{P1}$) dazu ausgebildet ist, an einen ersten Knoten ($N_1$) zwischen dem Buck-Schalter ($SW_B$) und einem Buck-Induktor ($L_B$) des Gleichspannungswandlers (62) geschaltet zu werden; einen zweiten Schutzkondensator ($C_{P2}$), wobei ein erstes Ende des zweiten Schutzkondensators ($C_{P2}$) an einen dritten Knoten ($N_3$) geschaltet ist und ein zweites Ende des zweiten Schutzkondensators ($C_{P2}$) dazu ausgebildet ist, an eine Masse und eine Anode einer Buck-Diode ($D_B$) des Gleichspannungswandlers (62) geschaltet zu werden; einen Schutzinduktor ($L_P$), der direkt zwischen dem zweiten Knoten (N2) und dem dritten Knoten (N3) geschaltet ist, um positive und negative Werte für einen elektrischen Strom ($I_{LP}$) durch den Schutzinduktor ($L_P$) zuzulassen; und eine Schutzdiode ($D_P$), wobei eine Anode der Schutzdiode ($D_P$) an den dritten Knoten ($N_3$)

geschaltet ist und eine Kathode der Schutzdiode ($D_P$) dazu ausgebildet ist, an den ersten Knoten ($N_1$) geschaltet zu werden; wobei der Schutzinduktor ($L_P$) an den zweiten Schutzkondensator ($C_{P2}$) über den dritten Knoten ($N_3$) geschaltet ist und weiter dazu ausgebildet ist, an eine Kathode der Buck-Diode ($D_B$) über den zweiten Knoten ($N_2$) geschaltet zu werden; und wobei, wenn der Buck-Schalter ($SW_B$) zwischen einem EIN-Zustand und einem AUS-Zustand entsprechend dem Schaltsignal ($S_2$) geschaltet wird, die Schutzschaltung dazu ausgebildet ist, eine Schutzspannung zwischen dem ersten Knoten ($N_1$) und der Masse bereitzustellen, so dass die Spannungsbeanspruchung ($V_{SW}$) des Buck-Schalters ($SW_B$) kleiner ist als eine Eingangsspannung ($V_{in}$), die zwischen einer Spannungseingangsklemme ($N_i$) und der Masse des Gleichspannungswandlers (62) bereitgestellt wird.

2. Gleichspannungswandler (62), umfassend die Schutzschaltung nach Anspruch 1, wobei die Steuereinheit (140) dazu ausgebildet ist, den Buck-Schalter ($SW_B$) während eines ersten Zeitabschnitts (Ts×D) in den EIN-Zustand zu steuern, so dass die Schutzdiode ($D_P$) im AUS-Zustand gehalten wird, und wobei die Steuereinheit (140) dazu ausgebildet ist, den Buck-Schalter ($SW_B$) während eines zweiten Zeitabschnitts (Ts×(1-D)) in den AUS-Zustand zu steuern, so dass die Schutzdiode ($D_P$) im EIN-Zustand gehalten wird.

3. Gleichspannungswandler (62) nach Anspruch 2, wobei die Schutzspannung gleich einer Spannung einer Reihenschaltung des ersten Schutzkondensators und der Buck-Diode ($D_B$) IST.

4. Gleichspannungswandler (62) nach Anspruch 2, wobei eine Spannung einer Reihenschaltung des ersten Schutzkondensators ($C_{P1}$), des Schutzinduktors ($L_P$) und des zweiten Schutzkondensators ($C_{P2}$) gleich einer Summe aus einer Spannung des Buck-Induktors und einer Ausgangsspannung in einem ersten Zeitabschnitt ist, während dessen der Buck-Schalter im EIN-Zustand ist, und die Ausgangsspannung eine Spannung zwischen der Spannungsausgangsklemme und der Masse ist.

5. Gleichspannungswandler (62) nach Anspruch 2, wobei eine Spannung des ersten Schutzkondensators ($C_{P1}$) gleich einer Spannung einer Reihenschaltung des Schutzinduktors ($L_P$) und der Schutzdiode ($D_P$) in dem zweiten Zeitabschnitt ist, während dessen der Buck-Schalter ($SW_B$) im AUS-Zustand ist.

6. Gleichspannungswandler (62) nach Anspruch 2, wobei eine Spannung des zweiten Schutzkondensators ($C_{P1}$) gleich einer Spannung einer Reihenschaltung des Schutzinduktors ($L_P$) und der Buck-Diode ($D_B$) in dem zweiten Zeitabschnitt ist, während dessen der Buck-Schalter im AUS-Zustand ist.

7. Gleichspannungswandler (62) nach Anspruch 2, wobei der erste Schutzkondensator ($C_{P1}$) und der zweite Schutzkondensator ($C_{P2}$) dazu ausgebildet sind, in einem ersten Betriebsmodus des ersten Zeitabschnitts entladen zu werden, und der erste Schutzkondensator ($C_{P1}$) und der zweite Schutzkondensator ($C_{P2}$) dazu ausgebildet sind, in einem zweiten Betriebsmodus des ersten Zeitabschnitts geladen zu werden,

wobei der erste Betriebsmodus ein Betriebsmodus von dem Zeitpunkt an ist, zu dem der Buck-Schalter ($SW_B$) durch die Steuereinheit (140) gesteuert vom AUS-Zustand in den EIN-Zustand geschaltet wird, bis zu dem Zeitpunkt, zu dem der elektrische Strom ($I_{LP}$) 0 A von einem negativen Wert aus erreicht,
wobei der zweite Betriebsmodus ein Betriebsmodus ist, in dem der elektrische Strom ($I_{LP}$) allmählich von 0 A ansteigt, während der Buck-Schalter ($SW_B$) durch die Steuereinheit (140) gesteuert im EIN-Zustand gehalten wird.

8. Gleichspannungswandler (62) nach Anspruch 2, wobei in einem dritten Betriebsmodus des zweiten Zeitabschnitts der elektrische Strom vom zweiten Knoten ($N_2$) zum dritten Knoten ($N_3$) durch den Schutzinduktor ($L_P$) fließt, und in einem vierten Betriebsmodus des zweiten Zeitabschnitts der elektrische Strom vom dritten Knoten ($N_3$) zum zweiten Knoten ($N_2$) durch den Schutzinduktor ($L_P$) fließt,

wobei der dritte Betriebsmodus ein Betriebsmodus von dem Zeitpunkt an ist, zu dem der Buck-Schalter ($SW_B$) durch die Steuereinheit (140) gesteuert vom EIN-Zustand in den AUS-Zustand geschaltet wird, bis zu dem Zeitpunkt, zu dem der elektrische Strom ($I_{LP}$) 0 A von einem positiven Wert aus erreicht,
wobei der vierte Betriebsmodus ein Betriebsmodus ist, in dem der elektrische Strom ($I_{LP}$) allmählich von 0 A abnimmt, während der Buck-Schalter ($SW_B$) durch die Steuereinheit (140) gesteuert im AUS-Zustand gehalten wird.

9. Gleichspannungswandler (62) nach einem der Ansprüche 2 bis 8, wobei der Gleichspannungswandler (62) als Buck-Wandler ausgebildet ist, umfassend einen Buck-Kondensator ($C_B$), der zwischen der Spannungsausgangsklemme ($N_O$) und der Masse geschaltet ist, zum Unterdrücken einer Welligkeit der Ausgangsspannung ($V_{out}$).

**10.** Batterieladegerät (50) umfassend den Gleichstrom (DC)-DC-Gleichspannungswandler nach Anspruch 9.

**11.** Elektrofahrzeug, umfassend das Batterieladegerät (50) nach Anspruch 10.

## Revendications

**1.** Circuit de protection (70) pour un convertisseur de courant continu (CC)-CC (62) d'un véhicule électrique (1), qui comprend une unité de commande (140) configurée pour commander un interrupteur abaisseur ($SW_B$) du convertisseur CC-CC (62) par un signal de commutation ($S_2$) présentant un cycle de commutation et un cycle de service pour générer une tension de sortie (Vout) au niveau d'une borne de sortie de tension ($N_o$) du convertisseur CC-CC (62) ;

dans lequel le circuit de protection (70) inclut : un premier condensateur de protection ($C_{P1}$), dans lequel une seconde extrémité du premier condensateur de protection ($C_{P1}$) est connectée à un deuxième nœud ($N_2$) et une première extrémité du premier condensateur de protection ($C_{P1}$) est configurée pour être connectée à un premier nœud ($N_1$) entre le commutateur abaisseur ($SW_B$) et un inducteur abaisseur ($L_B$) du convertisseur CC-CC (62) ; un second condensateur de protection ($C_{P2}$),
dans lequel une première extrémité du second condensateur de protection ($C_{P2}$) est connectée à un troisième nœud ($N_3$) et une seconde extrémité du second condensateur de protection ($C_{P2}$) est configurée pour être connectée à la masse et à une anode d'une diode abaisseuse ($D_B$) du convertisseur CC-CC (62) ; un inducteur de protection ($L_P$) connecté directement entre le deuxième nœud (N2) et le troisième nœud (N3) afin de permettre des valeurs positives et négatives pour un courant électrique ($I_{LP}$) à travers l'inducteur de protection ($L_P$) ;
et une diode de protection ($D_P$), dans lequel une anode de la diode de protection ($D_P$) est connectée au troisième nœud ($N_3$) et une cathode de la diode de protection ($D_P$) est configurée pour être connectée au premier nœud ($N_1$) ; dans lequel l'inducteur de protection ($L_P$) est connecté au second condensateur de protection ($C_{P2}$) par le biais du troisième nœud ($N_3$) et est en outre configuré pour être connecté à une cathode de la diode abaisseuse ($D_B$) par le biais du deuxième nœud ($N_2$) ; et
dans lequel, lorsque l'interrupteur abaisseur ($SW_B$) est commuté entre un état ON et un état OFF en fonction du signal de commutation ($S_2$),

le circuit de protection est configuré pour apporter une tension de protection entre le premier nœud ($N_1$) et la masse, de telle sorte que la contrainte de tension ($V_{SW}$) de l'interrupteur abaisseur ($SW_B$) est plus petite qu'une tension d'entrée ($V_{in}$) apportée entre une borne d'entrée de tension ($N_i$) et la masse du convertisseur CC-CC (62).

**2.** Convertisseur CC-CC (62) comprenant le circuit de protection selon la revendication 1, dans lequel l'unité de commande (140) est configurée pour commander le interrupteur abaisseur ($SW_B$) dans l'état ON pendant une première période de temps ($Ts \times D$), de telle sorte que la diode de protection ($D_P$) est maintenue dans l'état OFF, et dans lequel l'unité de commande (140) est configurée pour commander le interrupteur abaisseur ($SW_B$) dans l'état OFF pendant une seconde période de temps ($Ts \times (1-D)$), de telle sorte que la diode de protection ($D_P$) est maintenue dans l'état ON.

**3.** Convertisseur CC-CC (62) selon la revendication 2, dans lequel la tension de protection est égale à une tension d'un circuit en série du premier condensateur de protection et de la diode abaisseuse ($D_B$).

**4.** Convertisseur CC-CC (62) selon la revendication 2,

dans lequel une tension d'un circuit en série du premier condensateur de protection ($C_{P1}$), de l'inducteur de protection ($L_p$) et du second condensateur de protection ($C_{P2}$) est égale à une somme d'une tension de l'inducteur abaisseur et d'une tension de sortie pendant une première période de temps pendant laquelle le interrupteur abaisseur est dans l'état ON, et la tension de sortie est une tension entre la borne de sortie de tension et la masse.

**5.** Convertisseur CC-CC (62) selon la revendication 2, dans lequel une tension du premier condensateur de protection ($C_{P1}$) est égale à une tension d'un circuit en série de l'inducteur de protection ($L_P$) et de la diode de protection ($D_P$) pendant la seconde période de temps pendant laquelle le interrupteur abaisseur ($SW_B$) est dans l'état OFF.

**6.** Convertisseur CC-CC (62) selon la revendication 2, dans lequel une tension du second condensateur de protection ($C_{P1}$) est égale à une tension d'un circuit en série de l'inducteur de protection ($L_P$) et de la diode abaisseuse ($D_B$) pendant la seconde période de temps pendant laquelle le interrupteur abaisseur est dans l'état OFF.

**7.** Convertisseur CC-CC (62),

selon la revendication 2, dans lequel le premier condensateur de protection ($C_{P1}$) et le second condensateur de protection ($C_{P2}$) sont configurés pour être déchargés dans un premier mode de fonctionnement de la première période, et le premier condensateur de protection ($C_{P1}$) et le second condensateur de protection ($C_{P2}$) sont configurés pour être chargés dans un deuxième mode de fonctionnement de la première période,

dans lequel le premier mode de fonctionnement est un mode de fonctionnement allant du moment où le interrupteur abaisseur ($SW_B$) est commuté par l'unité de commande (140) de l'état OFF à l'état ON jusqu'au moment où le courant électrique ($I_{LP}$) atteint 0A à partir d'une valeur négative,

dans lequel le deuxième mode de fonctionnement est un mode de fonctionnement dans lequel le courant électrique ($I_{LP}$) augmente progressivement à partir de 0A tandis que le interrupteur abaisseur ($SW_B$) est maintenu par l'unité de commande (140) dans l'état ON.

8. Convertisseur CC-CC (62),

selon la revendication 2, dans lequel, dans un troisième mode de fonctionnement de la seconde période, le courant électrique allant du deuxième nœud ($N_2$) vers le troisième nœud ($N_3$) s'écoule à travers l'inducteur de protection ($L_P$), et dans un quatrième mode de fonctionnement de la seconde période, le courant électrique allant du troisième nœud ($N_3$) vers le deuxième nœud ($N_2$) s'écoule à travers l'inducteur de protection ($L_P$),

dans lequel le troisième mode de fonctionnement est un mode de fonctionnement allant du moment où le interrupteur abaisseur ($SW_B$) est commuté par l'unité de commande (140) de l'état ON à l'état OFF jusqu'au moment où le courant électrique ($I_{LP}$) atteint 0A à partir d'une valeur positive,

dans lequel le quatrième mode de fonctionnement est un mode de fonctionnement dans lequel le courant électrique ($I_{LP}$) diminue progressivement à partir de 0A tandis que le interrupteur abaisseur ($SW_B$) est maintenu par l'unité de commande (140) dans l'état OFF.

9. Convertisseur CC-CC (62) selon l'une quelconque des revendications 2 à 8, dans lequel le convertisseur CC-CC (62) est configuré en tant que convertisseur abaisseur comprenant un condensateur abaisseur ($C_B$), qui est connecté entre la borne de sortie de tension ($N_o$) et la masse, pour supprimer une ondulation de la tension de sortie ($V_{out}$).

10. Chargeur (50) de batterie comprenant le convertisseur de courant continu (CC)-CC selon la revendication 9.

11. Véhicule électrique comprenant le chargeur (50) de batterie selon la revendication 10.

FIG. 1

FIG. 2

FIG. 3

FIG. 4

FIG. 5

$T_S$

$T_S \times D$

$T_S \times (1-D)$

$SW_B$

ON

Off

$I_{SW}$

0

$I_{LB}$

0

$I_{LP}$

0

$I_{CP1}$

$I_{DP}$

$V_{SW}$

0

$\frac{1}{1+D} \times V_{in}$

**REFERENCES CITED IN THE DESCRIPTION**

**Patent documents cited in the description**

- KR 1020200111845
- WO 2020035969 A1
- US 2003001516 A1
- JP 2007082332 A